# EUROPEAN PATENT SPECIFICATION

(11) **EP 4 259 374 B1**
(45) Date of publication and mention of the grant of the patent: **07.10.2026**
(21) Application number: 21904002.9
(22) Date of filing: 01.12.2021
(51) Int. Cl.: B23K 37/02, F16D 3/84, B60K 17/22, B23C 3/12, F16D 3/06

(54) **PROTECTIVE COVER STRUCTURE FOR THE SLIP ASSEMBLY**
SCHUTZABDECKUNGSSTRUKTUR FÜR DIE GLEITANORDNUNG
STRUCTURE DE COUVERCLE DE PROTECTION POUR ENSEMBLE DE GLISSEMENT

(30) Priority: 10.12.2020 TR 202020202
(43) Date of publication of application: 18.10.2023
(73) Proprietor: Tirsan Kardan Sanayi Ve Ticaret Anonim Sirketi, Yunusemre - Manisa (TR)
(72) Inventor: ÖZÇELIK, Esra, Yunusemre/Manisa (TR)
(74) Representative: Yamankaradeniz, Kemal
(86) International application number: PCT/TR2021/051330
(87) International publication number: WO 2022/125035

(56) References cited:
- EP-A1- 1 441 137
- EP-A1- 2 366 913
- CN-U- 203 481 968
- CN-U- 205 697 916
- DE-A1- 1 910 284
- JP-A- H10 203 188
- KR-A- 20120 018 578
- KR-B1- 101 004 312
- US-A- 4 592 556

## Description

### Field of the Invention

The present invention relates to the protective covers used in the slip assembly of the drive shaft that provides power transmission in vehicles in the automotive sector.

In particular, the present invention relates to a protective cover structure that eliminates the sealing problems in the seal and the operational difficulties experienced in the production of the protective cover tube with the help of the modular connection of the seal, which provides sealing in the slip assembly on the protective cover tube shaped in the form of a straight tube, by means of the carrier body.

### State of the Art

A drive shaft is used between the transmission output shaft and the differential in motor vehicles so as to transmit the power generated in the engine to the differential by rotational movement. It has a slip assembly consisting of yoke shaft, sliding sleeve and protective cover.

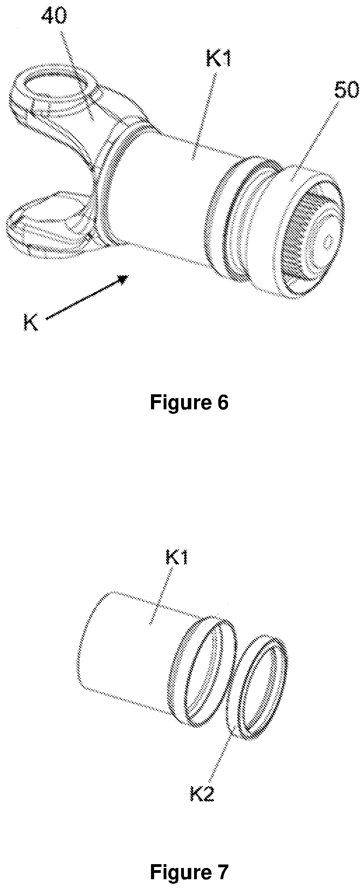

In Figure 6, the slip assembly (K) in the state of the art is seen. The slip assembly (K) in the state of the art mainly consists of the following; the protective cover (K1) in the state of the art which consists of a single tube in a single piece with one end expanded by the mechanical process seen in figure 7 and is connected to said expanded end with a seal (K2), sliding sleeve (50) which is intertwined with the yoke shaft (40) and yoke shaft (40) connected to one end of the protective cover (K1) in the state of the art. In order to connect the seal (K2) to the protective cover (K1) in the state of the art, a housing form must be shaped at the end of the protective cover (K1) in the state of the art. In this forming process, runout etc. due to operational difficulties is encountered. In addition, the seal (K2) may be damaged or driven in an inaccurate manner while it is being driven into said housing. In this case, the seal (K2) exerts an excessive pressure on the surface or creates a gap. At the same time, manufacturing for different lengths is only possible with the use of different molds due to connecting the seal (K2) to the housing expanded by the mechanical operation at the end of the protective cover (K1) in the state of the art and the protective cover (K1) in the state of the art being monolithic. This causes additional mold and operational costs in production.

EP2366913A1 numbered document has encountered result of search. This document relates to a protective embodiment, which would enhance the functionality of the sealing felts used inside the sliding sets providing axial motion in drive shafts, and which would extend their service lives and thus extend the expected life of the drive shaft. This document does not comprise any grip surface which extends into the protective cover tube and connects the carrier body to the end of the protective cover tube.

Another encountered document is EP1441137A1. This invention relates to a sealing arrangement for the length compensation of a universal joint shaft, but this document does not comprise any grip surface which extends into the protective cover tube and connects the carrier body to the end of the protective cover tube.

Another encountered document result of research is DE1910284A1. This document relates to such universal shaft which includes two shaft portions having respective inner ends splined to one another so that the shaft portions are axially displaceable but nonrotatable relative to one another. This document does not comprise any grip surface which extends into the protective cover tube and connects the carrier body to the end of the protective cover tube.

As a result, in order to solve the abovementioned problems and the insufficiency of the current solutions makes it necessary to make a development in the relevant technical field.

### Aim of the Invention

The present invention relates to a protective cover structure for the slip assembly which eliminates the abovementioned disadvantages and brings new advantages to the relevant technical field.

The main aim of the invention is to obtain a protective cover structure that provides a modular connection of the seal in the slip assembly onto the protective cover tube shaped in the form of a straight tube, by means of the carrier body.

The aim of the invention is to eliminate the operational difficulties encountered in the production of protective cover tube.

Another aim of the invention is to eliminate the sealing problems in the seal.

Another aim of the invention is to eliminate the problems experienced in the assembly of the seal, with the help of its straight-form protective cover tube.

Another aim of the invention is to reduce the production costs by eliminating the mechanical expanding operation by producing the protective cover tube in a simple tube cutting line.

Another aim of the invention is to cut the protective cover tube into desired lengths for the production of protective cover in different lengths, eliminating the need for different molds and simplifying the production processes.

Another aim of the invention is to increase production efficiency and to respond to expectations easily and in a short time by using seal structures suitable for different sealing expectations in different vehicle applications by means of the modular connection of the seal on the protective cover tube by means of the carrier body.

Another aim of the invention is to ensure that the costs are reduced by manufacturing different materials from the protective cover tube of the carrier body by means of the modular connection of the seal on the protective cover tube with the carrier body and it is to provide a more rigid and compatible structural relationship between the seal made of elastomer material and the carrier body made of a different material other than metal material.

In order to fulfill all the purposes mentioned above and which may arise from the detailed description, the present invention is protective cover structure of the drive shaft that provides power transmission in vehicles in the automotive sector, which is used in slip assemblies with a yoke shaft and a sliding sleeve, comprising the following;
- a protective cover tube in the form of a straight tube, which is connected to a yoke shaft at one end and a sliding sleeve connected to the same with a yoke shaft,
- double-lipped seal or three-lipped seal or flexible spring-energized seal which are located at the end of the sleeve side of the protective cover tube and provide seal between the protective cover tube and the sliding sleeve,
- carrier body which is connected to the end of the protective cover tube such that double-lipped seal or three-lipped seal or flexible spring-energized seal are contained therein and provides fitting double-lipped seal or three-lipped seal or flexible spring-energized seal into the protective cover tube.

The structural and characteristic features of the present invention will be understood clearly by the following drawings and the detailed description made with reference to these drawings. Therefore, the evaluation shall be made by taking these figures and the detailed description into consideration.

### Figures Clarifying the Invention

**Figure 1****:** Is the disassembled view of the inventive protective cover.
**Figure 2****:** Is the assembled view of the yoke shaft and sliding sleeve in the inventive protective cover.
**Figure 3****:** Is the section view of the double-lipped seal of the inventive protective cover structure, in connection with the end of the protective cover tube.
**Figure 4****:** Is the section view of the three-lipped seal of the inventive protective cover structure, in connection with the end of the protective cover tube.
**Figure 5****:** Is the section view of the flexible spring-energized seal of the inventive protective cover structure, in connection with the end of the protective cover tube.
**Figure 6****:** Is the view of the slip assembly in the state of the art.
**Figure 7****:** Is the disassembled view of the protective cover and seal in the state of the art of the slip assembly in the state of the art.

### Description of the Part References

**10.** Protector cover tube
**20a.** Double-lipped seal
**20b.** Three-lipped seal
**20c.** Flexible spring-energized seal
**30.** Carrier body
**31.** Grip surface
**40.** Yoke shaft
**50.** Sliding sleeve
**K.** Slip assembly in the state of the art
**K1.** Protective cover in the state of the art
**K2.** Seal

### Detailed Description of the Invention

In this detailed description, the preferred alternatives of the inventive protective cover structure are described only for clarifying the subject matter such that no limiting effect is created.

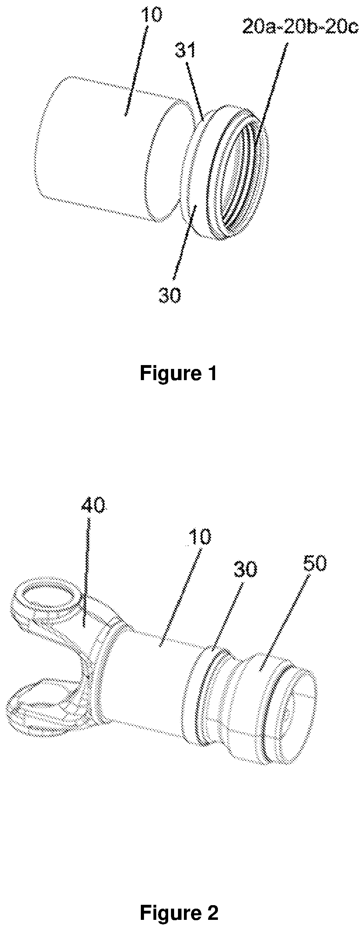

In Figure 1, the disassembled view of the inventive protective cover is given. Accordingly protective cover mainly comprises the following; a protective cover tube (10) in the form of a straight tube which is connected to a yoke shaft (40) at one end and a sliding sleeve (50) connected to the same with a yoke shaft (40), double-lipped seal (20a) or three-lipped seal (2b) or flexible spring-energized seal (20c) which are connected to the end of the protective cover tube (10) on the side of the sliding sleeve (50) and work on the sliding sleeve (50) and provide sealing, carrier body (30) that connects the end of the protective cover tube (10) to the double-lipped seal (20a) or three-lipped seal (2b) or the flexible spring-energized seal (20c) to the protective cover tube (10) .

The protective cover tube (10), which constitutes the main structure of the inventive protective cover structure, is shaped in the form of a straight tube. As can be seen in Figure 2, a yoke shaft (40) is connected to one end of the protective cover tube (10). On the other hand, the sliding sleeve (50) is connected to the protective cover tube (10) by passing through the other end of the protective cover tube (10) and being intertwined with the yoke shaft (40). A double-lipped seal (20a) or a three-lipped seal (2b) or a flexible spring-energized seal (20c) is placed at the end of the protective cover tube (10) so as to provide sealing between the protective cover tube (10) and the sliding sleeve (50).

The lips of the double-lipped seal (20a) or a three-lipped seal (2b) or a flexible spring-energized seal (20c) have flexible structure, they are made of different materials to be compatible with the surface where it provides sealing.

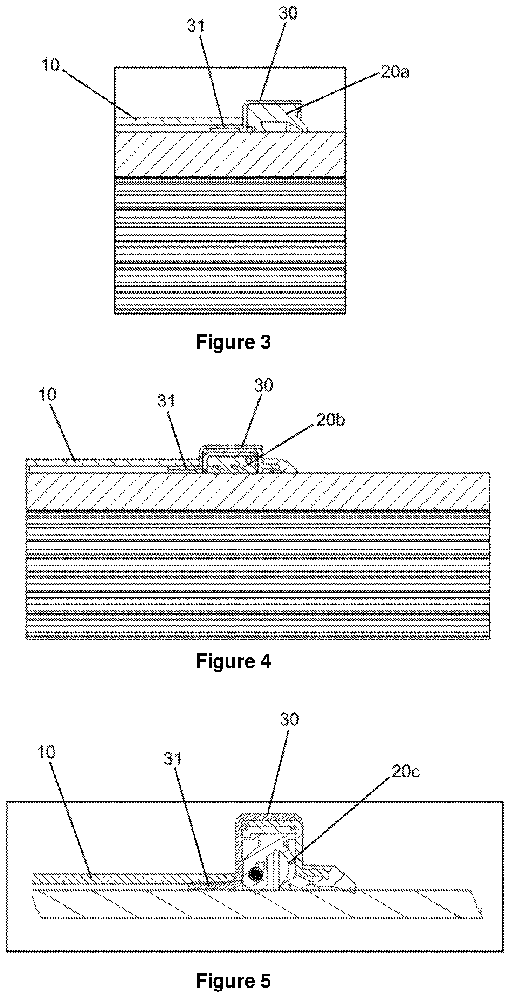

A carrier body (30) is engaged to the end of the protective cover tube (10) such that it contains the double-lipped seal (20a) as seen in Figure 3, three-lipped seal (20b) as seen in Figure 4 and flexible spring-energized seal (20c) as seen in Figure 5 for fitting double-lipped seal (20a) or three-lipped seal (20b) or flexible spring-energized seal (20c) into end of protective cover tube (10). The grip surface (31) at the lower end of said carrier body (30) extends into the protective cover tube (10). Thus, it is ensured that the carrier body (30) is fixed to the end of the protective cover tube (10).

In the inventive protective cover tube, sealing is provided between the protective cover tube (10) and the sliding sleeve (50) by connecting the double-lipped seal (20a) or the three-lipped seal (2b) or the flexible spring-energized seal (20c) to the end of the protective cover tube (10) in the form of a straight tube by means of the carrier body (30).

## Claims

1. A protective cover structure of the drive shaft that provides power transmission in vehicles in the automotive sector, which is used in slip assemblies with a yoke shaft (40) and a sliding sleeve (50), **by comprising** the following;
- a protective cover tube (10) in the form of a straight tube, which is connected to a yoke shaft (40) at one end and a sliding sleeve (50) connected to the same with a yoke shaft (40),
- double-lipped seal (20a) or three-lipped seal (20b) or flexible spring-energized seal (20c) which are located at the end of the sliding sleeve (50) side of the protective cover tube (10) and provides seal between the protective cover tube (10) and the sliding sleeve (50),
- a carrier body (30) which is connected to the end of the protective cover tube (10) such that double-lipped seal (20a) or three-lipped seal (20b) or flexible spring-energized seal (20c) are contained therein and provides fitting double-lipped seal (20a) or three-lipped seal (20b) or flexible spring-energized seal (20c) into the protective cover tube (10),
- a grip surface (31) which is located at the lower end of the said carrier body (30) and extends into the protective cover tube (10) and connects the carrier body (30) to the end of the protective cover tube (10),
**characterized in that** the lips of the double-lipped seal (20a) or the three-lipped seal (2b) or the flexible spring-energized seal (20c) have flexible structure and they are made of different materials to be compatible with the surface where it provides sealing.

## Patentansprüche

1. Schutzabdeckungsstruktur der Antriebswelle, die Leistungsübertragung in Fahrzeugen im Automobilsektor bereitstellt, die in Gleitanordnungen mit einer Jochwelle (40) und einer Schiebehülse (50) verwendet wird, **umfassend** das Folgende:
- ein Schutzabdeckungsrohr (10) in der Form eines geraden Rohres, das mit einer Jochwelle (40) an einem Ende und einer Schiebehülse (50), die damit verbunden ist, mit einer Jochwelle (40) verbunden ist,
- Doppellippendichtung (20a) oder Dreilippendichtung (20b) oder flexible federbelastete Dichtung (20c), die sich an dem Ende der Seite der Schiebehülse (50) des Schutzabdeckungsrohres (10) befinden und Dichtung zwischen dem Schutzabdeckungsrohr (10) und der Schiebehülse (50) bereitstellen,
- einen Trägerkörper (30), der mit dem Ende des Schutzabdeckungsrohres (10) verbunden ist, sodass Doppellippendichtung (20a) oder Dreilippendichtung (20b) oder flexible federbelastete Dichtung (20c) darin enthalten sind und passende Doppellippendichtung (20a) oder Dreilippendichtung (20b) oder flexible federbelastete Dichtung (20c) in das Schutzabdeckungsrohr (10) bereitstellt,
- eine Grifffläche (31), die sich an dem unteren Ende des Trägerkörpers (30) befindet und sich in das Schutzabdeckungsrohr (10) erstreckt und den Trägerkörper (30) mit dem Ende des Schutzabdeckungsrohres (10) verbindet,
**dadurch gekennzeichnet, dass** die Lippen der Doppellippendichtung (20a) oder der Dreilippendichtung (2b) oder der flexiblen federbelasteten Dichtung (20c) flexible Struktur aufweisen und sie aus verschiedenen Materialien hergestellt sind, um mit der Oberfläche, an der sie Dichtung bereitstellen, kompatibel zu sein.

## Revendications

1. Structure de couvercle de protection de l'arbre d'entraînement qui assure la transmission de puissance dans des véhicules du secteur automobile, laquelle est utilisée dans des ensembles de glissement avec un arbre de culasse (40) et un manchon coulissant (50), **comprenant** ce qui suit :
- un tube de couvercle de protection (10) sous la forme d'un tube droit, qui est relié à un arbre de culasse (40) à une extrémité et un manchon coulissant (50) relié à celui-ci avec un arbre de culasse (40),
- joint à double lèvre (20a) ou joint à triple lèvre (20b) ou joint souple à ressort de précharge (20c) qui sont situés à l'extrémité du côté du manchon coulissant (50) du tube de couvercle de protection (10) et assurent l'étanchéité entre le tube de couvercle de protection (10) et le manchon coulissant (50),
- un corps de support (30) qui est relié à l'extrémité du tube de couvercle de protection (10) de manière à loger le joint à double lèvre (20a) ou le joint à triple lèvre (20b) ou le joint souple à ressort de précharge (20c) dans celui-ci et assure le montage du joint à double lèvre (20a) ou du joint à triple lèvre (20b) ou du joint souple à ressort de précharge (20c) dans le tube de couvercle de protection (10),
- une surface de préhension (31) qui est située à l'extrémité inférieure dudit corps de support (30) et s'étend dans le tube de couvercle de protection (10) et relie le corps de support (30) à l'extrémité du tube de couvercle de protection (10),
**caractérisée en ce que** les lèvres du joint à double lèvre (20a) ou du joint à triple lèvre (2b) ou du joint souple à ressort de précharge (20c) ont une structure souple et elles sont faites de matériaux différents afin d'être compatibles avec la surface à laquelle elles assurent l'étanchéité.
